# EUROPÄISCHE PATENTSCHRIFT

(11) **EP 0 512 446 B1**
(45) Veröffentlichungstag und Bekanntmachung des Hinweises auf die Patenterteilung: **08.03.1995**
(21) Anmeldenummer: 92107484.5
(22) Anmeldetag: 02.05.1992
(51) Int. Cl.: B65G 47/68, B65G 47/71

(54) **Anordnung zum Umformen eines angeförderten mehrspurigen und dicht gepackten Behälterstroms in mehrere parallele, jeweils durch Einteilelemente voneinander getrennte Behälterreihen**
Arrangement for transforming a multiple track flow of conveyed and close packed containers into several parallel rows of containers, separated from each other by dividing elements
Dispositif pour transformer un courant à plusieures voies de récipients convoyés et très tassés en plusieures files parallèles de récipients, séparés entre eux par des éléments de division

(30) Priorität: 07.05.1991 DE 4114875
(43) Veröffentlichungstag der Anmeldung: 11.11.1992
(73) Patentinhaber: KHS Maschinen- und Anlagenbau Aktiengesellschaft, D-47057 Duisburg (DE)
(72) Erfinder: Münch, Karl, W-6148 Heppenheim (DE)

(56) Entgegenhaltungen:
- DE-A- 3 515 032
- US-A- 4 895 245

## Beschreibung

Die Erfindung bezieht sich auf eine Anordnung gemäß Oberbegriff Patentanspruch 1.

Unter "mehrspuriger, dicht gepackter Behälterstrom" ist im Sinne der Erfindung ein Behälterstrom zu verstehen, in welchem die Behälter in mehreren Spuren bzw. Reihen entweder tatsächlich dicht gepackt, d. h. an ihren Umfangsflächen gegeneinander anliegend vorhanden sind, oder aber zumindest von der Ausbildung des diesen Behälterstrom fördernden Transportelementes her die Möglichkeit besteht, daß sich die Behälter auch unterschiedlicher Reihen bzw. Spuren an ihren Umfangsflächen unmittelbar berühren. In einem solchen, mehrspurigen und dicht gepackten Behälterstrom weisen die Behälter dann eine verwabte Formation bzw. "Waben-Formation" auf. Hierunter ist eine Formation bzw. Anordnung zu verstehen, in der die Behälter in jeweils benachbarten Reihen bzw. Spuren um den halben Behälterdurchmesser gegeneinander versetzt sind, d. h. die Behälter quer zur Förderrichtung "kurze Querreihen" bilden, die mit der Förderrichtung einen Winkel von etwa 60^{o} einschließen.

"Voneinander getrennte Behälterreihen" sind im Sinne der Erfindung solche, sich in Förderrichtung erstreckende Behälterreihen, bei denen die Behälter jeder Behälterreihe jeweils von einer Gasse aufgenommen und die Behälter einer Gasse durch Einteilelemente, die beispielsweise von Führungsgeländern gebildet sind, von den Behältern einer benachbarten Gasse getrennt sind.

Eine Anordnung der eingangs erwähnten Art ist bekannt (DE-A 37 10 528) und dient insbes. dazu, um aus einem angeförderten Behälterstrom die für eine Behältereinpackmaschine erforderlichen Behälterreihen zu bilden. Ein gewisser Nachteil der bekannten Anordnung besteht darin, daß die mit dieser Anordnung maximal erreichte Leistung (Anzahl der umgeformten Behälter je Zeiteinheit) vielfach nicht ausreicht. Diese Leistungsgrenze ist insbes. durch die bei hohen Leistungen sehr hohe Fördergeschwindigkeit bzw. Geschwindigkeit der Förderbänder auch am Eingangsbereich der Übergangsstrecke bzw. dadurch bedingt, daß bei hoher Fördergeschwindigkeit sich eine hohe Aufprallgeschwindigkeit der Behälter an den für die Gasseneinteilung vorgesehenen Einteilelementen ergibt und diese Aufprallgeschwindigkeit ab einer bestimmten Leistung zu einem Zerstören der Behälter, zumindest jedoch zu Störungen im Behälterfluß führt.

Aufgabe der Erfindung ist es, eine Anordnung der eingangs geschilderten Art so weiterzubilden, daß mit ihr bei gesteigerter Leistung eine stoß- und druckfreie Umformung möglich ist.

Zur Lösung dieser Aufgabe ist eine Anordnung entsprechend dem kennzeichnenden Teil des Patentanspruches 1 ausgebildet.

Bei der erfindungsgemäßen Anordnung erfolgt die Umformung des angeförderten Behälterstrom schrittweise, d.h. durch die bereits an der Übergangsstrecke vorgesehene Gasseneinteilung werden aus dem mehrspurigen, dichtgepackten Behälterstrom zunächst mehrere ebenfalls mehrspurige, allerdings voneinander getrennte Behälterströme gebildet. Die Breite bzw. die Anzahl der Reihen bzw. Spuren dieser getrennten Behälterströme ist kleiner als die Förderbreite, d.h. die Anzahl der Reihen oder Spuren des angeförderten Behälterstromes. Die Behälter der getrennten, mehrspurigen Behälterströme werden dann in einem Ausgangsbereich der Übergangsstrecke zu jeweils einer Behälterreihe zusammengeführt. Durch diese stufenweise Umformung, bei der die Anzahl der Behälterreihen des mehrspurigen, angeförderten Behälterstromes größer ist als die Anzahl der voneinander getrennten Behälterreihen am Abförderer kann im Vergleich zum Stand der Technik bei gleicher Leistung der Anordnung die Fördergeschwindigkeit am Eingangsbereich wesentlich geringer gehalten werden, so daß eine verbesserte, stoß- und druckfreie Umformung möglich ist. Bei gleichgroßer Fördergeschwindigkeit am Eingangsbereich der Übergangsstrecke ist aber auch im Vergleich zum Stand der Technik eine wesentlich höhere Leistung möglich.

Entscheidend ist bei der erfindungsgemäßen Anordnung auch, daß durch die stufenförmige Umformung die für das Aufprallen der Behälter und für hieraus evtl. resultierende Betriebsstörungen besonders kritischen Aufprallbereiche, nämlich die im Behälterstrom liegenden freien Enden der Einteilelemente in ihrer Anzahl bezogen auf die Anzahl der Behälterreihen des angeförderten Behälterstromes stark reduziert sind.

Während nämlich beim Stand der Technik bei n Reihen des angeförderten Behälterstroms die Anzahl dieser Aufprallbereiche gleich n-1 ist, ist die Anzahl der Aufprallbereiche bei der Erfindung um ein Vielfaches kleiner, d.h. sie beträgt (n/n') - 1. Hierbei ist n wiederum die Anzahl der Behälterreihen im angeförderten Behälterstrom und n' die Anzahl der möglichen Behälterreihen in jeder getrennten Behälterreihe einer Gasse der Übergangsstrecke.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: in vereinfachter Darstellung und in Seitenansicht eine Ausführungsform der erfindungsgemäßen Anordnung;
- Fig. 2: eine Draufsicht auf die Anordnung gemäß Fig. 1, und zwar zusammen mit einigen den angeförderten Behälterstrom sowie die Behälterreihen bildenden Behältern;
- Fig. 3: eine Darstellung wie Fig. 2, jedoch mit einer Vielzahl von Behältern;
- Fig. 4: einen Schnitt entsprechend der Linie I-I der Fig. 2;
- Fig. 5: einen Schnitt entsprechend der Linie II-II der Fig. 2;

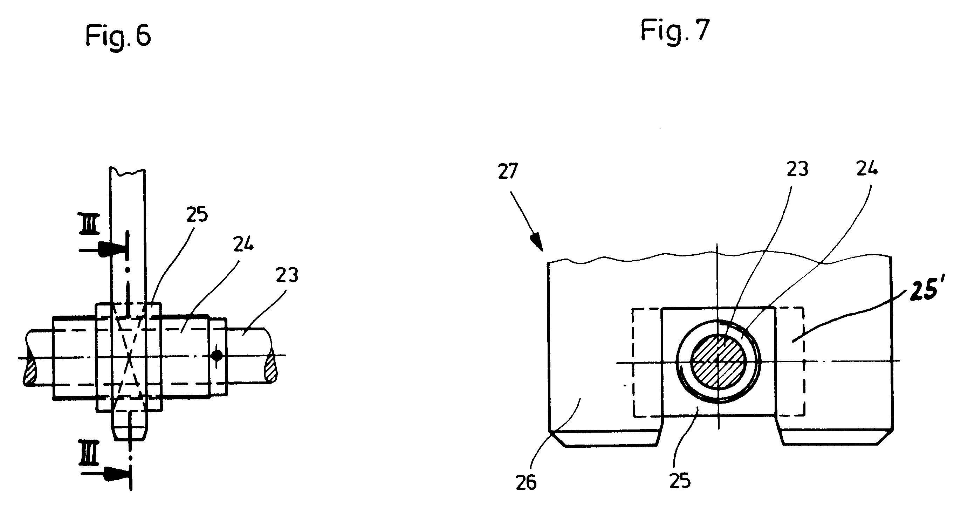

- Fig. 6: in vergrößerter Darstellung ein Verstellelement für ein Führungsgeländer der Anordnung;
- Fig. 7: einen Schnitt entsprechend der Linie III-III der Fig. 6.

Die in den Figuren dargestellte Ausführungsform der erfindungsgemäßen Anordnung weist im wesentlichen einen Zuförderer 1, einen Abförderer 2 sowie eine Übergangsstrecke 3 auf, die sich in Förderrichtung A an den Zuförderer anschließt und dem Abförderer 2 in Förderrichtung A vorgeschaltet ist.

Der Zuförderer 1 besteht im wesentlichen aus mehreren, in sich geschlossenen und endlos umlaufend angetriebenen Förderbändern, die jeweils von Scharnierbandketten 4 gebildet sind und mit ihren oberen, sich in Förderrichtung A erstreckenden Länge quer zu dieser Förderrichtung A unmittelbar aneinander angrenzend angeordnet sind. Die Scharnierbandketten 4 bilden somit mit ihren oberen Längen eine im wesentlichen horizontale Stand- oder Transportfläche für die Behälter 5, die aufrechtstehende Flaschen sind.

Am Übergang zwischen dem Zuförderer 1 und der Übergangsstrecke 3 ist eine angetriebene Umlenkung für die Scharnierbandketten 4 sowie ein in etwa niveaugleich mit der Transportebene des Zuförderers 1 und der anschließenden Übergangsstrecke 3 liegendes Stau- oder Gleitblech 6 vorgesehen. Quer zur Förderrichtung A ist der Zuförderer 1 an jeder Seite durch ein Führungsgeländer 7' begrenzt. Jedes Führungsgeländer 7' erstreckt sich in Förderrichtung A über das Gleitblech 6 hinaus in einen sich an das Gleitblech 6 anschließenden Eingangsbereich 3a der Übergangsstrecke 3.

An der Übergangsstrecke 3 ist die wiederum im wesentlichen horizontale Stand- bzw. Transportebene für die Behälter 5 von den oberen Längen von Scharnierbandketten 7 und 8 gebildet, wobei jeweils im Mittelbereich 3b der Übergangsstrecke 3 in Förderrichtung A eine Scharnierbandkette 7 an eine Scharnierbandkette 8 anschließt.

Die Scharnierbandketten 7, die im wesentlichen auch den Eingangsbereich 3a der Übergangsstrecke 3 bilden, und die Scharnierbandketten 8, die im wesentlichen den Ausgangsbereich 3c der Übergangsstrecke 3 bilden und bis an den Übergang zum Abförderer 2 reichen, sind umlaufend angetrieben, und zwar die Scharnierbandketten 7 mit einer im Vergleich zu den Scharnierbandketten 4 etwas größeren Geschwindigkeit und die Scharnierbandketten 8 mit einer Geschwindigkeit, die um das Doppelte größer ist als die Geschwindigkeit der Scharnierbandketten 7, aber auch etwas größer ist als die Geschwindigkeit der Scharnierbandketten des Abförderers 2, d.h. als die Transportgeschwindigkeit des Abförderers 2. Bei der dargestellten Ausführungsform sind durch Getriebeanordnungen die Verhältnisse, in denen die Geschwindigkeiten der Scharnierbandketten 7 und 8 zueinander stehen, fest vorgegeben. Der Antrieb der Scharnierbandketten 7 und 8 erfolgt durch einen regelbaren Motor, dessen Geschwindigkeit in Abhängigkeit von der Leistung der nachgeschalteten Behältereinpackmaschine gesteuert wird.

Bei einer Geschwindigkeit der Scharnierbandketten 4, d.h. bei einer Transportgeschwindigkeit des Zuförderers 1 von beispielsweise etwa 0,18 m/s betragen die Geschwindigkeit der Scharnierbandketten 7 etwa 0,2 m/s und die Geschwindigkeit der Scharnierbandketten 8 etwa 0,4 m/s, wobei die Transportgeschwindigkeit des Abförderers etwa 0,34 m/s ist.

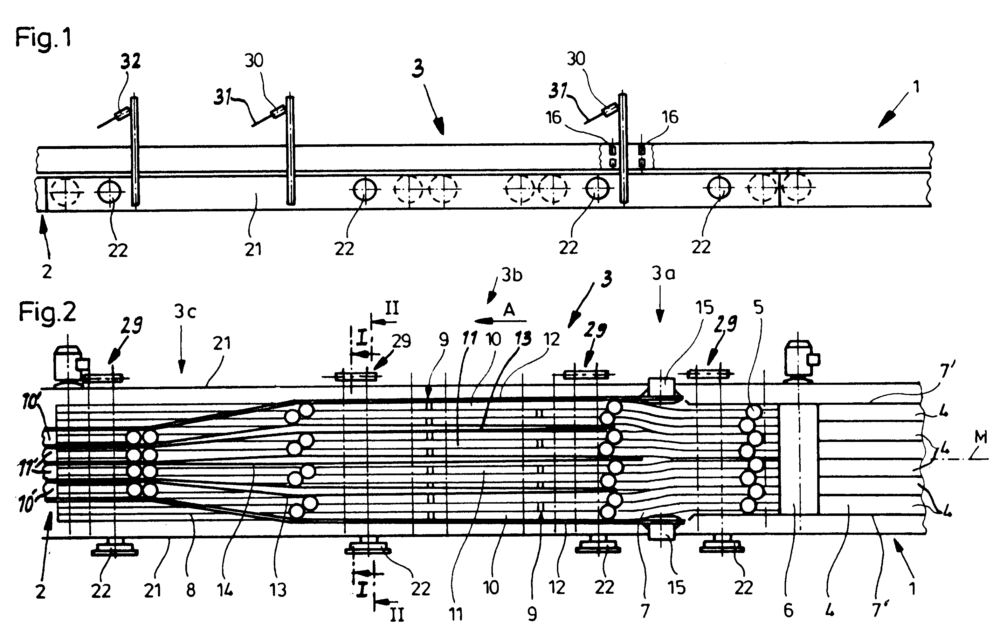

Wie die Fig. 2 zeigt, sind die Anschlußbereiche 9 zwischen den Scharnierbandketten 7 und 8 in Förderrichtung A jeweils versetzt, und zwar derart, daß jedem Anschlußbereich 9 quer zur Förderrichtung A eine durchgehende Scharnierbandkette 7 bzw. 8 benachbart liegt.

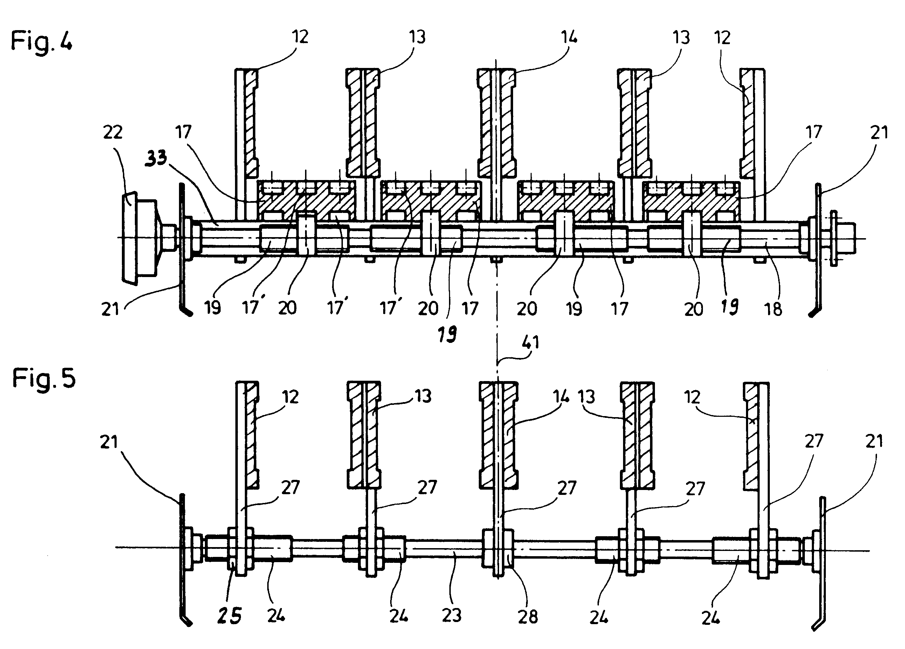

Bei der dargestellten Ausführungsform sind quer zur Förderrichtung A jeweils zwölf Scharnierbandketten 7 bzw. 8 nebeneinander vorgesehen und bilden vier Gruppen von jeweils insgesamt drei quer zur Förderrichtung A nebeneinander liegenden Scharnierbandketten 7 und/oder 8. Am Eingangsbereich 3a sind die dort ausschließlich von den Scharnierbandketten 7 gebildeten Gruppen fächerartig auseinander geführt, und zwar spiegelsymmetrisch zu einer vertikalen, die Förderrichtung A einschließenden Mittelebene M. Auf den Eingangsbereich 3a folgend bildet die Übergangsstrecke 3 insgesamt vier Gassen 10 und 11, von denen die äußeren Gassen 10 außen durch Führungsgeländer 12 und innen, d. h. zu der benachbarten Gasse 11 durch Führungsgeländer 13 getrennt sind. Zur Trennung der beiden inneren Gassen 11 ist ein im wesentlichen in der Mittelebene M verlaufendes Führungsgeländer 14 vorgesehen. Wie die Figuren 4 und 5 zeigen, sind die Führungsgeländer 13 und 14 jeweils als doppelseitig wirkende Führungsgeländer ausgebildet. Die beiden Führungsgeländer 12, deren Abstand größer ist als der Abstand der Führungsgeländer 7' schließen an letztere an. Am Übergang zwischen den Führungsgeländern 7' und den Führungsgeländern 12 ist jeweils ein Stauschalter 15 vorgesehen.

An ihrem im Eingangsbereich 3a befindlichen, in Förderrichtung A vorderen Ende sind die Führungsgeländer 13 und 14, von denen das mittlere Führungsgeländer 14 wesentlich weiter in den Eingangsbereich 3a hineinreicht, jeweils mit um horizontale Achsen frei drehbar gelagerten Rollen 16 versehen, um Stöße der Behälter 5 auf die in Förderrichtung A vorderen Enden der Führungsgeländer 13 und 14 in ihrer Wirkung zu reduzieren und das Hineinbewegen der Behälter 5 in die Gassen 10 bzw. 11 zu erleichtern. Im Mittelbereich 3b erstrecken sich die Führungsgeländer 12, 13 und 14 im wesentlichen parallel zueinander in Förderrichtung A.

Im Ausgangsbereich 3c sind die Führungsgeländer 12 und 13 schräg zur Förderrichtung A nach innen geführt, so daß sich dort die zunächst relativ breiten Gassen 10 und 11 auf die schmäleren Gassen 10' bzw. 11' verengen, die auch die Gassen des Abförderers 2 bilden und deren Breite im wesentlichen jeweils einem einspurigen Behälterstrom entspricht, d. h. im wesentlichen gleich oder geringfügig größer ist als der Durchmesser der Behälter 5.

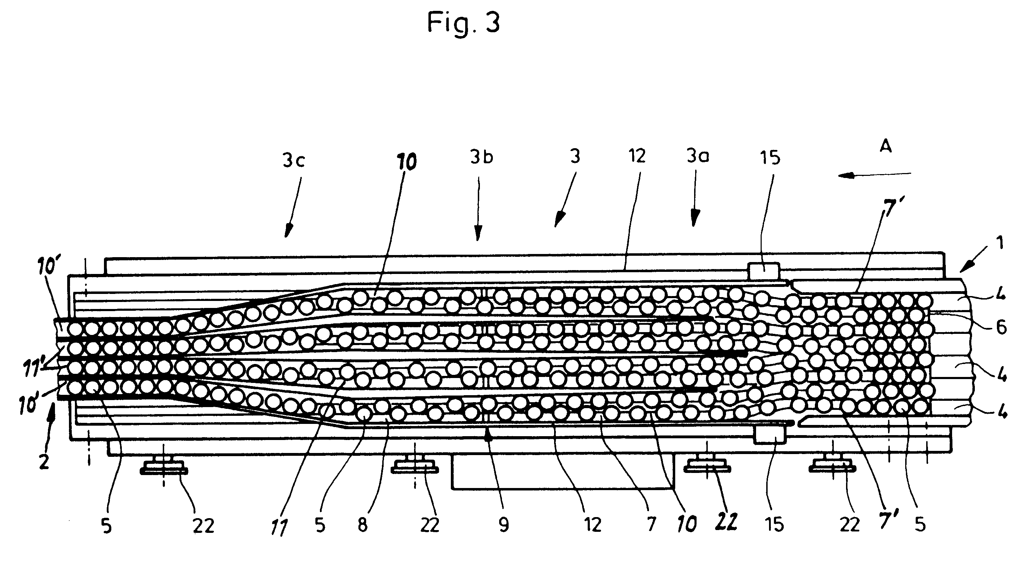

Wie die Figuren 2 und 3 zeigen, werden die Behälter 5 über den Zuförderer als dicht gepackter, mehrspuriger, d. h. bei der dargestellten Ausführungsform als achtspuriger Behälterstrom zugeführt, in welchem die Behälter 5 zumindest am Ende des Zuförderers 1 nicht nur mit ihrer Umfangsfläche unmittelbar gegeneinander anliegen, sondern auch wabenartig derart gegeneinander versetzt sind, daß jeder Behälter 5 einer Reihe bzw. einer Spur des mehrspurigen Behälterstroms gegenüber den Behältern einer benachbarten Reihe dieses Behälterstroms um den halben Behälterdurchmesser versetzt ist. Durch die Verwendung des Stau- oder Gleitbleches 6 wird diese verwabte Anordnung bzw. Wabenformation der Behälter 5 am Ende des Zuförderers 1 auf jeden Fall sichergestellt, da die auf dem Gleitblech 6 aufstehenden Behälter 5 erst durch nachfolgende Behälter weitergefördert bzw. weitergeschoben werden.

Da die Scharnierbandketten 7 mit etwas größerer Geschwindigkeit umlaufen als die Scharnierbandketten 4, bilden die Behälter 5 nach dem Passieren des Gleitbleches 6 am Beginn des Eingangsbereiches 3a einen aufgelockerten Behälterstrom, der in seiner Formation aber noch durch den Verlauf beeinflußt werden kann, welche die in Förderrichtung hintere Kante des Gleitbleches 6 aufweist. Durch den fächerartigen Verlauf der von den Scharnierbandketten 7 gebildeten Scharnierbandketten-Gruppen am Eingangsbereich 3a wird der Behälterstrom auch quer zur Förderrichtung A auseinander bewegt, d. h. es bilden sich kurze, jeweils aus zwei Behältern 5 bestehende Querreihen aus, in denen die beiden Behälter 5 in einer Achsrichtung, die schräg zur Förderrichtung A, d. h. in einem Winkel von etwa 60^{o} zur Förderrichtung A verläuft, nebeneinander angeordnet sind und in Förderrichtung A voneinander beabstandet sind. Durch den Verlauf der Scharnierbandketten 7 werden die äußeren, von jeweils zwei Behältern 5 gebildeten, kurzen und schräg zur Förderrichtung A verlaufenden Querreihen in die äußeren Gassen 10 und die innen liegenden Querreihen in die inneren Gassen 11 stoßfrei hineinbewegt, so daß sich in jeder Gasse 10 bzw. 11 ein aufgelockerter, zunächst zweispuriger Behälterstrom ergibt, in welchem die Behälter 5 der ursprünglichen Wabenformation entsprechend von Reihe zu Reihe versetzt sind. Durch die im Vergleich zu den Scharnierbandketten 7 höhere Geschwindigkeit der Scharnierbandketten 8 ergibt sich dann im Mittelbereich 3b noch eine weitere Auflockerung dieser zweispurigen Behälterströme in den Gassen 10 bzw. 11, so daß die Behälter 5 schließlich am Ausgangsbereich 3c stoßfrei zu insgesamt vier parallelen Behälterreihen in den Gassen 10' und 11' zusammengeführt werden können. Der Abförderer 2, über den die Behälter 5 beispielsweise einer nicht dargestellten Behältereinpackmaschine zugeführt werden, ist beispielsweise von vier Transportbändern bzw. Scharnierbandketten gebildet und besitzt äußere Führungsgeländer 12 sowie innere, die einzelnen Gassen 10' und 11' voneinander trennende Führungsgeländer 13 und 14, die die Fortsetzung der Führungsgeländer 12, 13 bzw. 14 der Übergangsstrecke 3 bilden.

Zur Kontrolle des Behälter- bzw. Flaschenstroms sind am Beginn des Mittelbereichs 3b bzw. am Anfang der Gassen 10 -11 und am Übergang zum Ausgangsbereich 3c, d. h. dort wo sich die Gassen 10 und 11 verengen, Kontrollelemente 30 vorgesehen. Diese Kontrollelemente besitzen jeweils einen schwenkbaren Arm 31, dessen Länge so gewählt ist und der so über den sich unter dem jeweiligen Kontrollelement vorbeibewegenden Behältern 5 angeordnet ist, daß jeder Arm 31 nur dann in eine untere Stellung schwenkt, wenn zwei in Förderrichtung A aufeinander folgende Behälter 5 einen größeren Abstand voneinander aufweisen. Mit den Kontrollelementen 30 wird somit die Dichte des Behälterstroms am Eingang bzw. Ausgang des Mittelbereichs bei b kontrolliert. Aufgrund der von diesen Kontrollelementen 30 gelieferten Signale wird insbesondere der Zuförderer 1 so gesteuert, daß sich in den Gassen 10' und 11' des Abförderers 2 die angestrebten Behälterreihen mit dicht aufeinander folgenden Behältern 5 ergeben.

Am Beginn der schmäleren Gassen 10' und 11' sind noch weitere den Kontrollelementen 30 entsprechende Kontrollelemente 32 vorgesehen, die den Behälterstrom in bezug auf evtl. umgefallene Behälter 5 überwachen.

Die Scharnierbandketten 7 und 8 sind mit ihren oberen Längen an schienen- oder leistenartigen Führungselementen 17 geführt, die an ihrer Ober- und Unterseite jeweils drei Längsnuten 17' aufweisen und auf horizontalen Quertraversen 33 aufliegen, welchen die beiden Rahmenteile 21 zu einem Rahmen verbinden. In den Längsnuten 17' an der Oberseite sind die drei Scharnierbandketten 7 bzw. 8 einer Scharnierbandkettengruppe geführt. Auch im Mittelbereich 3b sind die Scharnierbandketten 7 bzw. 8 an Führungselementen 17 geführt, die dort allerdings zumindest an den Anschlußbereichen 9 unterbrochen sind, wobei dann in der Mitte des Mittelbereichs 3b an den Führungselementen 17 sowohl Scharnierbandketten 7 als auch Scharnierbandketten 8 geführt sind. Da die Führungselemente 17 an ihrer Ober- und Unterseite symmetrisch ausgebildet sind, können am Eingangsbereich 3a die gleichen Führungselemente 17 sowohl für die nach rechts als auch für die nach links fächerartig auseinandergeführten Scharnierbandketten 7 verwendet werden.

Um mit ein und derselben Anordnung Behälter 5 mit unterschiedlichen Durchmesser verarbeiten zu können, ist die Breite der Gassen 10 und 11 einstellbar. Hierfür sind die Führungselemente 17 aber auch die Geländer 12 und 13 senkrecht zur Förderrichtung A und symmetrisch zur Mittelebene M verstellbar. Hierfür liegen die Führungselemente 17 mit ihrer Unterseite auf Einstellspindeln 18 auf, die sich mit ihrer Achse in horizontaler Richtung senkrecht zur Förderrichtung A erstrecken und im Bereich jedes Führungselementes jeweils mit einem Gewindeabschnitt 19 versehen sind. Auf der einen Seite der Mittelebene M sind diese Gewindeabschnitte 19 Linksgewinde und auf der anderen Seite der Mittelebene M Rechtsgewinde. Auf jedem Gewindeabschnitt 19 ist ein Muttergewindestück 20 vorgesehen, welches in eine Längsnut 17' an der Unterseite des zugehörigen Führungselementes 17 eingreift.

Die Muttergewindestücke 20 sind bei der dargestellten Ausführungsform mit einer Gewindebohrung versehene Platten mit im wesentlichen rechteckförmigem Querschnitt.

Die Einstellspindeln 18 sind beidendig in jeweils einem Rahmenteil 21 des Rahmens der Anordnung drehbar gelagert. Zum Einstellen der Einstellspindel 18 ist an einer Seite ein Einstellrad 22 mit einer Einstellskala vorgesehen. Hierdurch ist es möglich, auch nach einer Verstellung eine Einstellung, die sich für einen bestimmten Behälterdurchmesser bereits bewährt hat, wieder aufzufinden.

Mit den von den Einstellspindeln 18 bzw. den dortigen Gewindeabschnitten 19 und Muttergewindestücken 20 gebildeten Verstellelementen kann der Abstand der einzelnen Führungselemente 17 und damit der Abstand der Scharnierbandketten 7 und 8 von der Mittelebene M symmetrisch zu dieser Mittelebene eingestellt, d. h. verkleinert oder vergrößert werden.

Zur Einstellung der Führungsgeländer 12 und 13 ebenfalls symmetrisch zur Mittelebene M dienen Einstellspindeln 23, von denen jede einer Einstellspindel 18 benachbart ist und mit ihrer Achse ebenfalls in horizontaler Richtung senkrecht zur Förderrichtung angeordnet ist. Die Einstellspindeln 23, die wiederum beidendig in jeweils einem Rahmenteil 21 gelagert sind, weisen Gewindeabschnitte 24 auf, von denen die Gewindeabschnitte 24 auf der einen Seite der Mittelebene M als Rechtsgewinde und auf der anderen Seite der Mittelebene M als Linksgewinde ausgebildet sind. Ebenso wie die Gewindeabschnitte 19 sind auch die Gewindeabschnitte 24 bevorzugt von Gewindehülsen gebildet, die auf einer die Einstellspindel 23 bildenden Welle aufgeschoben und dort in geeigneter Weise befestigt sind. Auf jedem Gewindeabschnitt 24 sitzt wiederum ein Muttergewindestück 25, welches quaderförmig ausgebildet ist an zwei in Förderrichtung A gegeneinander versetzten Seiten jeweils eine Nut 25' aufweist. In diese Nuten 25' greift das gabelförmig ausgebildete untere Ende 26 eines Halters 27 der Führungsgeländer 12 bzw. 13 ein. Das mittlere Führungsgeländer 14 besitzt ebenfalls die vertikalen Halter 27, die mit ihren unteren gabelförmigen Enden 26 allerdings jeweils in eine ringförmige Nut in einem verdickten Bereich 28 der Einstellspindel 23 eingreifen, so daß beim Drehen der Einstellspindel 23 die Mittellage, d. h. die Lage im Bereich der Mittelebene M für das mittlere Geländer 14 beibehalten wird. Jede Einstellspindel 23 ist über einen Antrieb 29, beispielsweise über einen Kettentrieb mit der zugehörigen Einstellspindel 18 verbunden, so daß durch Drehen an einem Einstellrad 22 sowohl die Führungselemente 17 und damit die Scharnierbandketten 7 bzw. 8 als auch die Führungsgeländer 12 und 13 verstellt werden. Durch die vorbeschriebene Befestigung der Führungsgeländer 12, 13 und 14 an den Einstellspindeln 23 bzw. den dortigen Muttergewindestücken 25 ist es möglich, diese Führungsgeländer 12, 13 und 14 durch einfaches Abheben zu entfernen bzw. auszutauschen.

Die Erfindung wurde voranstehend an einem Ausführungsbeispiel beschrieben. Es versteht sich, daß Änderungen sowie Abwandlungen möglich sind, ohne daß dadurch der die Erfindung tragende Erfindungsgedanke verlassen wird.

### Aufstellung der verwendeten Bezugsziffern

- 1: Zuförderer
- 2: Abförderer
- 3: Übergangsstrecke
- 3a: Eingangsbereich
- 3b: Mittelbereich
- 3c: Ausgangsbereich
- 4: Scharnierbandkette
- 5: Behälter
- 6: Gleitblech
- 7': Führunggeländer
- 7: Scharnierbandkette
- 8: Scharnierbandkette
- 9: Anschlußbereich
- 10, 10': Gasse
- 11, 11': Gasse
- 12, 13, 14: Führungsgeländer
- 15: Stauschalter
- 16: Rollen
- 17: Führungselement
- 17': Längsnut
- 18: Einstellspindel
- 19: Gewindeabschnitt
- 20: Muttergewindestück
- 21: Rahmenteil
- 22: Einstellrad
- 23: Einstellspindel
- 24: Gewindeabschnitt
- 25: Muttergewindestück
- 25': Nut
- 26: Ende
- 27: Halter
- 28: Bereich
- 29: Antrieb
- 30: Kontrollelement
- 31: Arm
- 32: Kontrollelement
- 33: Quertraverse

## Patentansprüche

1. Anordnung zum Umformen eines angeförderten mehrspurigen, dicht gepackten Behälterstroms in mehrere parallele, jeweils durch Einteilelemente (12, 14) voneinander getrennte Behälterreihen, mit einem zum Anfördern der Behälter (5) dienenden und von wenigstens einem Förderband (4) gebildeten Zuförderer (1), mit einem Abförderer (2), der durch in seiner Förderrichtung (A) verlaufende Einteilelemente (13, 14) in mehrere Gassen (10', 11') für jeweils eine Behälterreihe unterteilt ist, sowie mit einer Übergangsstrecke (3), die mit einem Eingangsbereich (3a) an den Zuförderer (1) anschließt und mit einem Ausgangsbereich (3c) in den Abförderer einmündet sowie durch in Förderrichtung (A) liegende obere Längen mehrerer quer zu dieser Förderrichtung (A) nebeneinander angeordneter Förderbänder (7, 8) gebildet ist, welche im Eingangsbereich (3a) zur Verteilung des angeförderten Behälterstroms auf die einzelnen Gassen fächerartig auseinander laufen, dadurch gekennzeichnet, daß die Übergangsstrecke (3) in einem an den Eingangsbereich (3a) anschließenden und dem Ausgangsbereich (3c) vorausgehenden Mittelbereich (3b) bereits eine Gasseneinteilung in Form mehrerer, durch Einteilelemente (13, 14) voneinander getrennter Gassen (10, 11) ausweist, von denen jede eine einem mehrspurigen Behälterstrom entsprechende Förderbreite aufweist, die allerdings um ein Vielfaches kleiner ist als die Förderbreite des Zuförderers (1), daß jede Gasse (10, 11) der Übergangsstrecke (3) unter Verringerung ihrer Breite in eine Gasse (10', 11') des Abförderers (2) einmündet, und daß zumindest die den Ausgangsbereich (3c) der Übergangsstrecke (3) bildenden Förderbänder (8) und das den Abförderer (2) bildende wenigstens eine Förderband mit einer Geschwindigkeit antreibbar sind, die größer ist als Fördergeschwindigkeit des Zuförderers (1) bzw. größer ist als die Geschwindigkeit des wenigstens einen Förderbandes (4) des Zuförderers (1).

2. Anordnung nach Anspruch 1, dadurch gekennzeichnet, daß die Förderbänder (8) des Ausgangsbereichs (3c) mit einer Geschwindigkeit antreibbar sind, die etwa der Fördergeschwindigkeit des Abförderers (2) entspricht.

3. Anordnung nach Anspruch 1, dadurch gekennzeichnet, daß die Förderbänder (8) des Ausgangsbereichs (3c) mit einer Geschwindigkeit antreibbar sind, die etwas größer ist als die Fördergeschwindigkeit des Abförderers (2).

4. Anordnung nach einem der Ansprüche 1 bis 3, dadurch gekennzeichnet, daß die Förderbänder (8) des Ausgangsbereichs (3c) mit einer Geschwindigkeit antreibbar sind, die um einen Faktor, der etwa gleich der maximal möglichen Anzahl von Spuren bzw. Behälterreihen in jeder Gasse (10, 11) des Mittelbereichs (3b) der Übergangsstrecke (3) ist, größer ist als die Fördergeschwindigkeit des Zuförderers (1).

5. Anordnung nach einem der Ansprüche 1 bis 4, dadurch gekennzeichnet, daß die Anzahl der Behälterreihen im angeförderten, dicht gepackten Behälterstrom des Zuförderers (1) um einen Faktor größer ist als die Anzahl der Behälterreihen des Abförderers, und daß dieser Faktor gleich der Anzahl der maximal möglichen Behälterreihen in jeder Gasse (10, 11) des Mittelbereichs (3b) der Übergangsstrecke (3) ist.

6. Anordnung nach einem der Ansprüche 1 bis 5, dadurch gekennzeichnet, daß die Übergangsstrecke (3) im Mittelbereich (3b) sowie im Ausgangsbereich (3c) eine Gasseneinteilung derart aufweist, daß sämtliche Gassen (10, 11) jeweils im wesentlichen gleiche Breite besitzen.

7. Anordnung nach einem der Ansprüche 1 bis 6, dadurch gekennzeichnet, daß die Anzahl der Reihen des mehrspurigen, angeförderten Behälterstroms des Zuförderers (1) gleich dem 2-Fachen der Anzahl der Behälterreihen des Abförderers (2) ist.

8. Anordnung nach einem der Ansprüche 1 bis 7, dadurch gekennzeichnet, daß die Übergangsstrecke (3) von wenigstens zwei Gruppen von Förderbändern (7, 8) gebildet ist, von denen jeweils in Förderrichtung (A) auf ein Förderband (7) der ersten Gruppe ein Förderband (8) einer zweiten Gruppe anschließt.

9. Anordnung nach Anspruch 8, dadurch gekennzeichnet, daß die Anschlußbereiche (9), an denen jeweils ein Förderband (7) der ersten Gruppe an ein Förderband (8) der zweiten Gruppe anschließt, in Förderrichtung (A) versetzt sind.

10. Anordnung nach Anspruch 9, dadurch gekennzeichnet, daß die Anschlußbereiche (9) etwa im Mittelbereich (3b) der Übergangsstrecke (3) vorgesehen sind.

11. Anordnung nach einem der Ansprüche 8 bis 10, dadurch gekennzeichnet, daß die Förderbänder (8) der zweiten Gruppe eine höhere Geschwindigkeit aufweisen als die Förderbänder (7) der ersten Gruppe.

12. Anordnung nach Anspruch 11, dadurch gekennzeichnet, daß die Geschwindigkeit der Förderbänder (8) der zweiten Gruppe um einen Faktor, der etwa gleich der maximal möglichen Anzahl von Spuren bzw. Behälterreihen in jeder Gasse (10, 11) des Mittelbereichs (3b) der Übergangsstrecke (3) ist, größer ist als die Geschwindigkeit der Förderbänder (7) der ersten Gruppe.

13. Anordnung nach Anspruch 12, dadurch gekennzeichnet, daß die Geschwindigkeit der Förderbänder (8) der zweiten Gruppe etwa doppelt so groß ist wie die Geschwindigkeit der Förderbänder (7) der ersten Gruppe.

14. Anordnung nach einem der Ansprüche 1 bis 13, dadurch gekennzeichnet, daß die im Mittelbereich (3b) gebildeten Gassen (10, 11) im wesentlichen parallel zueinander sowie parallel zu einer die Förderrichtung (A) einschließenden vertikalen Mittelebene (M) verlaufen.

15. Anordnung nach einem der Ansprüche 1 bis 14, dadurch gekennzeichnet, daß am Ausgangsbereich (3c) der Übergangsstrecke (3) die Gassen (10) der Übergangsstrecke (3) auf die Breite der Gassen (10', 11') des Abförderers (2) sich verengen und spiegelsymmetrisch zu der Mittelebene (M) zusammengeführt sind.

16. Anordnung nach einem der Ansprüche 1 bis 15, dadurch gekennzeichnet, daß die den Eingangsbereich (3a) bildenden Förderbänder (7) der Übergangsstrecke (3) spiegelsymmetrisch zu einer die Förderrichtung (A) einschließenden vertikalen Mittelebene (M) fächerartig auseinander laufen.

17. Anordnung nach einem der Ansprüche 1 bis 16, gekennzeichnet durch ein Stau- oder Gleitblech (6) am Übergang zwischen dem Zuförderer (1) und der Übergangsstrecke (3) zur Sicherstellung einer Wabenformation der Behälter (5) im angeförderten dicht gepackten Behälterstrom.

18. Anordnung nach einem der Ansprüche 1 bis 17, dadurch gekennzeichnet, daß die Behälter (5) in den Gassen (10, 11) der Übergangsstrecke (3) eine der Wabenformation des dicht gepackten angeförderten Behälterstroms entsprechende Formation aufweisen.

19. Anordnung nach einem der Ansprüche 1 bis 18, dadurch gekennzeichnet, daß die die Übergangsstrecke (3) bildenden Förderbänder (7, 8) eine Breite aufweisen, die kleiner ist als die Breite der Förderbänder (4) des Zuförderers (1) und/oder des Abförderers (2).

20. Anordnung nach einem der Ansprüche 1 bis 19, dadurch gekennzeichnet, daß die Förderbänder (7, 8) der Übergangsstrecke (3) mehrere Gruppen von in Förderrichtung (A) nebeneinander angeordneten Förderbändern bilden, und daß die Anzahl der Gruppen gleich der Anzahl der Gassen (10, 11) der Übergangsstrecke (3) ist.

21. Anordnung nach einem der Ansprüche 1 bis 20, dadurch gekennzeichnet, daß zumindest in einem Teilbereich der Übergangsstrecke (3) für die dortigen Förderbänder (7, 8) solche Führungen bzw. Führungselemente (17) vorgesehen sind, die durch erste Einstellmittel (18, 19, 20) quer zur Förderrichtung (A) verstellbar sind.

22. Anordnung nach Anspruch 21, dadurch gekennzeichnet, daß für jede Gruppe von in Förderrichtung nebeneinander angeordneten Förderbändern jeweils wenigstens eine verstellbare Führung bzw. wenigstens ein verstellbares Führungselement (17) vorgesehen ist.

23. Anordnung nach Anspruch 21 oder 22, dadurch gekennzeichnet, daß die ersten Einstellmittel von wenigstens einer Einstellspindel (18) mit Gewindeabschnitten (19) und von auf den Gewindeabschnitten (19) angeordneten Muttergewindestücken gebildet sind, die in die Führungselemente (17) eingreifen.

24. Anordnung nach Anspruch 23, dadurch gekennzeichnet, daß die Führungselemente (17) von den ersten Einstellmitteln bzw. von den dortigen Muttergewindestücken (20) abnehmbar sind.

25. Anordnung nach einem der Ansprüche 1 bis 24, gekennzeichnet durch zweite Einstellmittel zum Verstellen von die Gassen (10, 11; 10', 11') trennenden Einteilelementen (13) sowie von die äußeren Gassen (10, 10') außen begrenzenden Führungen (12) quer zur Förderrichtung (A).

26. Anordnung nach Anspruch 25, dadurch gekennzeichnet, daß die zweiten Einstellmittel von einer Einstellspindel (23) mit Gewindeabschnitten (24) und Muttergewindestücken (25) gebildet sind, an welch letzteren die Einteilelemente (13) bzw. Führungen (12) mit Haltern (27) befestigt sind.

27. Anordnung nach Anspruch 26, dadurch gekennzeichnet, daß die Halter (27) auf die jeweiligen Muttergewindestücke (25) von oben her aufsteckbar sind.

28. Anordnung nach einem der Ansprüche 21 bis 27, dadurch gekennzeichnet, daß jedem ersten Einstellmittel (18, 19, 20) ein zweites Einstellmittel (23, 24, 25) zugeordnet ist, und daß die einander zugeordneten ersten und zweiten Einstellmittel jeweils durch einen Antrieb (29) antriebsmäßig miteinander verbunden sind.

29. Anordnung nach einem der Ansprüche 21 bis 28, dadurch gekennzeichnet, daß zur manuellen Einstellung der ersten und/oder zweiten Einstellmittel (18, 19, 20; 23, 24, 25) ein Einstellrad (21) mit einer Einstellskala vorgesehen ist.

## Claims

1. Arrangement for the reshaping of an inwardly conveyed multitrack, tightly packed container stream into several parallel container rows each time separated one from the other by dividing elements (12, 14), with a feed conveyor (1) serving for the inward feeding of the containers (5) and formed by at least one conveyor belt (4), with a discharge conveyor (2), which is subdivided into several lanes (10', 11'), each for a respective container row, by dividing elements (13, 14) extending in its conveying direction (A), as well as with a transition section (3), which by an entry region (3a) adjoins the feed conveyor (1) and by an exit region (3c) opens into the discharge conveyor as well as is formed by upper lengths, which lie in the conveying direction (A), of several conveyor belts (7, 8), which are arranged one beside the other transversely to this conveying direction (A) and which diverge in fan shape in the entry region (3a) for the distribution of the inwardly conveyed container stream over the individual lanes, characterised thereby, that the transition section (3) in a middle region (3b), which follows the entry region (3a) and precedes the exit region (3c), already displays a lane division in the form of several lanes (10, 11), which are separated one from the other by dividing elements (13, 14) and each of which displays a conveying width which corresponds to a multitrack container stream, but is smaller by a multiple than the conveying width of the feed conveyor (1), that each lane (10, 11) of the transition section (3) with a reduction in its width opens into a lane (10', 11') of the discharge conveyor (2) and that at least the conveyor belts (8) forming the exit region (3c) of the transition section (3) and the at least one conveyor belt forming the discharge conveyor (2) are drivable at a speed which is greater than the conveying speed of the feed conveyor (1) or greater than the speed of the at least one conveyor belt (4) of the feed conveyor (1).

2. Arrangement according to claim 1, characterised thereby, that the conveyor belts (8) of the exit region (3c) are drivable at a speed which about corresponds with the conveying speed of the discharge conveyor (2).

3. Arrangement according to claim 1, characterised thereby, that the conveyor belts (8) of the exit region (3c) are drivable at a speed which is somewhat greater than conveying speed of the discharge conveyor (2).

4. Arrangement according to one of the claims 1 to 3, characterised thereby, that the conveyor belts (8) of the exit region (3c) are drivable at a speed which is greater than the conveying speed of the feed conveyor (1) by a factor which is about equal to the maximum possible number of tracks or container rows in each lane (10, 11) of the middle region (3b) of the transition section (3).

5. Arrangement according to one of the claims 1 to 4, characterised thereby, that the number of container rows in the inwardly conveyed, tightly packed container stream of the feed conveyor (1) is greater by a factor than the number of container rows of the discharge conveyor (2) and that this factor is equal to the number of the maximum possible container rows in each lane (10, 11) of the middle region (3b) of the transition section (3).

6. Arrangement according to one of the claims 1 to 5, characterised thereby, that the transition section (3) in the middle region (3b) as well as in the exit region (3c) displays a lane division in such a manner that all lanes (10, 11) each have substantially the same width.

7. Arrangement according to one of the claims 1 to 6, characterised thereby, that the number of the rows of the multitrack, inwardly conveyed container stream of the feed conveyor (1) is equal to twice the number of container rows of the discharge conveyor (2).

8. Arrangement according to one of the claims 1 to 7, characterised thereby, that the transition section (3) is formed by at least two groups of conveyor belts (7, 8), of which a conveyor belt (8) of a second group each time adjoins a conveyor belt (7) of the first group in conveying direction (A).

9. Arrangement according to claim 8, characterised thereby, that the connecting regions (9), at which a conveyor belt (7) of the first group adjoins a respective conveyor belt (8) of the second group, are displaced in conveying direction (A).

10. Arrangement according to claim 9, characterised thereby, that the connecting regions (9) are provided in about the middle region (3b) of the transition section (3).

11. Arrangement according to one of the claims 8 to 10, characterised thereby, that the conveyor belts (8) of the second group display a greater speed than the conveyor belts (7) of the first group.

12. Arrangement according to claim 11, characterised thereby, that the speed of the conveyor belts (8) of the second group is greater than the speed of the conveyor belts (7) of the first group by a factor which is about equal to the maximum possible number of tracks or container rows in each lane (10, 11) of the middle region (3b) of the transition section (3).

13. Arrangement according to claim 12, characterised thereby, that the speed of the conveyor belts (8) of the second group is about twice as great as the speed of the conveyor belts (7) of the first group.

14. Arrangement according to one of the claims 1 to 13, characterised thereby, that the lanes (10, 11) formed in the middle region (3b) extend substantially one parallelly to the other as well as to a vertical centre plane (M) including the conveying direction (A).

15. Arrangement according to one of the claims 1 to 14, characterised thereby, that the lanes (10) of the transition section (3) narrow at the exit region (3c) of the transition section (3) to the width of the lanes (10', 11') of the discharge conveyor (2) and are guided together in mirror symmetry to the centre plane (M).

16. Arrangement according to one of the claims 1 to 15, characterised thereby, that the conveyor belts (7) of the transition section (3), which form the entry region (3a), diverge in the manner of a fan in mirror symmetry to a vertical centre plane (M) including the conveying direction (A).

17. Arrangement according to one of the claims 1 to 16, characterised by a metal baffle or slide plate (6) at the transition between the feed conveyor (1) and the transition section (3) to secure a honeycomb formation of the containers (5) of the inwardly conveyed, tightly packed container stream.

18. Arrangement according to one of the claims 1 to 17, characterised thereby, that the containers (5) in the lanes (10, 11) of the transition section (3) display a formation corresponding with the honeycomb formation of the inwardly conveyed, tightly packed container stream.

19. Arrangement according to one of the claims 1 to 18, characterised thereby, that the conveyor belts (7, 8) forming the transition section (3) display a width which is smaller than the width of the conveyor belts (4) of the feed conveyor (1) and/or the discharge conveyor (2).

20. Arrangement according to one of the claims 1 to 19, characterised thereby, that the conveyor belts (7, 8) of the transition section (3) form several groups of conveyor belts arranged one beside the other in conveying direction (A) and that the number of the groups is equal to the number of the containers (5) of the transition section (3).

21. Arrangement according to one of the claims 1 to 20, characterised thereby, that guides or guide elements (17), which are displaceable transversely to the conveying direction (A) by first setting means (18, 19, 20), are provided for the conveyor belts (7, 8) present at least in a partial region of the transition section (3).

22. Arrangement according to claim 21, characterised thereby, that at least one displaceable guide or at least one displaceable guide element (17) is provided for each group of conveyor belts arranged one beside the other in the conveying direction (A).

23. Arrangement according to claim 21 or 22, characterised thereby, that the first setting means are formed by at least one setting spindle (18) with thread portions (19) and nut thread members which are arranged on the thread portions (19) and engage into the guide elements (17).

24. Arrangement according to claim 23, characterised thereby, that the guide elements (17) are removable from the first setting means or from the nut thread members (20) there.

25. Arrangement according to one of the claims 1 to 24, characterised by second setting means for displacing of the dividing elements (13), which separate the lanes (10, 11; 10', 11') as well as the guides (12), which outwardly bound the outer lanes (10, 10'), transversely to the conveying direction (A).

26. Arrangement according to claim 25, characterised thereby, that the second setting means are formed by a setting spindle (23) with thread portions (24) and nut thread members (25), at which latter the dividing elements (13) or the guides (12) are fastened by holders (27).

27. Arrangement according to claim 26, characterised thereby, that the holders (27) are pluggable from above onto the respective nut thread members (25).

28. Arrangement according to one of the claims 21 to 27, characterised thereby, that a second setting means (23, 24, 25) is associated with each first setting means (18, 19, 20) and that the mutually associated first and second setting means are drivingly connected together by a respective drive (29).

29. Arrangement according to one of the claims 21 to 28, characterised thereby, that a setting wheel (21) with a setting scale is provided for the manual setting of the first and/or second setting means (18, 19, 20; 23, 24, 25).

## Revendications

1. Dispositif pour transformer un courant à plusieurs voies de récipients convoyés et très tassés en plusieurs files parallèles de récipients séparées l'une de l'autre par des éléments séparateurs (12, 14), le dispositif comportant un transporteur d'alimentation (1) servant à convoyer les récipients (5) et qui est formé d'au moins une bande transporteuse (4), avec un transporteur d'évacuation (2), qui est subdivisé en plusieurs voies ou chemins (10', 11') pour à chaque fois une file de récipients par des éléments séparateurs (13, 14) s'étendant dans la direction de transport (A), le dispositif comportant aussi un trajet de transition (3) qui se raccorde par une zone d'entrée (3a) au transporteur d'alimentation (1) et débouche par une zone de sortie (3c) dans le transporteur d'évacuation et qui est formé par une longueur supérieure, située dans la direction de transport (A) de plusieurs bandes transporteuses (7, 8) disposées l'une à côté de l'autre transversalement par rapport à la direction de transport (A), ces bandes se séparant en éventail dans la zone d'entrée (3a) pour répartir dans les diverses voies le courant des récipients qui arrivent, dispositif caractérisé en ce que le trajet de transition (3) présente, dans une zone médiane (3b) faisant suite à une zone d'entrée (3a) et précédant une zone de sortie (3c), déjà une répartition entre des voies ou chemins sous forme de plusieurs voies ou chemins (10, 11) séparés les uns des autres par des éléments de guidage (13, 14), chemins dont chacun présente une largeur de transport correspondant à un courant de récipients répartis en plusieurs voies, cette largeur étant de toute manière plus petite d'un certain nombre de fois que la largeur de transport du transporteur (1) d'alimentation ; en ce que chaque chemin (10, 11) du trajet de transition (3) débouche, avec diminution de sa largeur, dans un chemin (10', 11') du transporteur d'évacuation (2) ; et en ce qu'au moins les bandes transporteuses (8) formant la zone de sortie (3c) du trajet de transition (3) et au moins une bande transporteuse formant le transporteur d'évacuation (2) peuvent être entraînées à une vitesse qui est supérieure à la vitesse de transport par le transporteur d'alimentation (1) ou qui est supérieure à la vitesse d'au moins une bande transporteuse (4) du transporteur d'alimentation (1).

2. Dispositif selon la revendication 1, caractérisé en ce que la bande transporteuse (8) de la zone de sortie (3c) peut être entraînée à une vitesse qui correspond approximativement à la vitesse de transport par le transporteur d'évacuation (2).

3. Dispositif selon la revendication 1, caractérisé en ce que les bandes transporteuses (8) de la zone de sortie (3c) peuvent être entraînées à une vitesse qui est un peu plus grande que la vitesse de transport par le transporteur d'évacuation (2).

4. Dispositif selon l'une des revendications 1 à 3, caractérisé en ce que les bandes transporteuses (8) de la zone de sortie (3c) peuvent être entraînées à une vitesse qui est supérieure, d'un facteur approximativement égal au nombre maximal possible de voies ou de files de récipients dans chaque chemin (10, 11) de la zone médiane (3b) du trajet de transition, à la vitesse de transport par le transporteur d'alimentation (1).

5. Dispositif selon l'une des revendications 1 à 4, caractérisé en ce que le nombre des files des récipients dans le courant des récipients, convoyés en étant très tassés, par le transporteur d'alimentation (1) est plus grand, d'un certain facteur, que le nombre des files de récipients du transporteur d'évacuation, et en ce que ce facteur est égal au nombre maximum des files possibles de récipients dans chaque chemin (10, 11) de la zone médiane (3b) du trajet de transition (3).

6. Dispositif selon l'une des revendications 1 à 5, caractérisé en ce que le trajet de transition (3) présente, dans la zone médiane (3b) ainsi que dans la zone de sortie (3c) une répartition en des chemins telle que tous les chemins (10, 11) présentent chaque fois essentiellement la même largeur.

7. Dispositif selon l'une des revendications 1 à 6, caractérisé en ce que le nombre des files du courant des récipients convoyés en plusieurs voies par le transporteur d'alimentation (1) est égal au double du nombre des files de récipients du transporteur d'évacuation (2).

8. Dispositif selon l'une des revendications 1 à 7, caractérisé en ce que le trajet de transition ou de transfert (3) est formé par au moins deux groupes de bandes transporteuses (7, 8) dont à chaque fois, dans la direction du transport (A), à une bande transporteuse (7) du premier groupe fait suite une bande transporteuse (8) d'un second groupe.

9. Dispositif selon la revendication 8, caractérisé en ce que les zones de raccordement (9), dans lesquelles à chaque fois une bande transporteuse (7) du premier groupe se raccorde à une bande transporteuse (8) du second groupe, sont décalées dans le sens du transport (A).

10. Dispositif selon la revendication 9, caractérisé en ce que les zones de raccordement (9) sont prévues approximativement dans la zone médiane (3b) du trajet de transition (3).

11. Dispositif selon l'une des revendications 8 à 10, caractérisé en ce que les bandes transporteuses (8) du second groupe présentent une vitesse supérieure à celle des bandes transporteuses (7) du premier groupe.

12. Dispositif selon la revendication 11, caractérisé en ce que la vitesse des bandes transporteuses (8) du second groupe est supérieure, d'un facteur, qui vaut approximativement le nombre maximal possible de voies ou de files de récipients dans chaque chemin (10, 11) de la zone médiane (3b) du trajet de transition (3), à la vitesse des bandes transporteuses (7) du premier groupe.

13. Dispositif selon la revendication 12, caractérisé en ce que la vitesse des bandes transporteuses (8) du second groupe vaut environ le double de la vitesse des bandes transporteuses (7) du premier groupe.

14. Dispositif selon l'une des revendications 1 à 13, caractérisé en ce que les voies ou chemins formés dans la zone médiane (3b) sont essentiellement parallèles les uns aux autres et parallèles à un plan médian vertical (M) comprenant le sens de transport (A).

15. Dispositif selon l'une des revendications 1 à 14, caractérisé en ce que, dans la zone de sortie (3c) du trajet de transition (3), les chemins (10) du trajet de transition (3) se rétrécissent à la largeur des chemins (10', 11') du transporteur (2) d' évacuation et se regroupent avec une symétrie de miroir par rapport au plan médian (M).

16. Dispositif selon l'une des revendications 1 à 15, caractérisé en ce que les bandes transporteuses (7) formant la zone d'entrée (3a) du trajet de transition (3) s'écartent en éventail avec une symétrie de miroir par rapport à un plan médian vertical (M) comportant le sens de transport (A).

17. Dispositif selon l'une des revendications 1 à 16, caractérisé par la présence d'une chicane de retenue ou tôle de glissement (6) à la zone de transition entre le transporteur (1) d'alimentation et le trajet (3) de transition pour garantir une formation en nid d'abeilles ou en quinconce des récipients (5) dans un courant de récipients convoyés et très tassés.

18. Dispositif selon l'une des revendications 1 à 17, caractérisé en ce que les récipients (5) se trouvant dans les chemins (10, 11) du trajet de transition (13) présentent une formation correspondant à la formation en quinconce ou en nid d'abeilles du courant des récipients convoyés en étant très tassés.

19. Dispositif selon l'une des revendications 1 à 18, caractérisé en ce que les bandes transporteuses (7, 8) formant le trajet (3) de transition présentent une largeur qui est plus petite que la largeur des bandes transporteuses (4) du transporteur (1) d'alimentation et/ou du transporteur (2) d'évacuation.

20. Dispositif selon l'une des revendications 1 à 19, caractérisé en ce que les bandes transporteuses (7, 8) du trajet de transition (3) forment plusieurs groupes de bandes transporteuses disposées l'une à côté de l'autre dans le sens du transport (A), et en ce que le nombre des groupes est égal au nombre des chemins (10, 11) du trajet de transition (3).

21. Dispositif selon l'une des revendications 1 à 20, caractérisé en ce qu'au moins dans une zone partielle du trajet de transition (3) il est prévu, pour les bandes transporteuses (7, 8) qui y sont, des guidages ou des éléments de guidage (17) réglables et déplaçables, grâce à un premier moyen de réglage (18, 19, 20), transversalement au sens du transport (A).

22. Dispositif selon la revendication 21, caractérisé en ce que, pour chaque groupe de bandes transporteuses disposées côte à côte dans le sens du transport, on prévoit à chaque fois au moins un guidage réglable ou au moins un élément de guidage (17) réglable.

23. Dispositif selon la revendication 21 ou 22, caractérisé en ce que les premiers moyens de réglage sont constitués d'au moins une tige de réglage (18) comportant des tronçons filetés (19) et par des parties à filetage femelle disposées sur les tronçons filetés (19) et qui pénètrent ou engrènent dans les éléments de guidage (17).

24. Dispositif selon la revendication 23, caractérisé en ce que les éléments de guidage (17) peuvent être enlevés des premiers moyens de réglage ou des parties à filetage femelle (20) qui s'y trouvent.

25. Dispositif selon l'une des revendications 1 à 24, caractérisé en ce qu'il comporte des seconds moyens de réglage pour décaler, transversalement au sens du transport (A), des éléments (13) séparant les voies ou chemins (10, 11 ; 10', 11' ) ainsi que les guidages (12) limitant vers l'extérieur les chemins extérieurs (10, 10' ).

26. Dispositif selon la revendication 25, caractérisé en ce que les seconds moyens de réglage sont formés par une tige de réglage (23) comportant des tronçons filetés (24) et des parties à filetage femelle (25), sur lesquelles les éléments de réglage (13) ou les guidages (12) sont fixés à l'aide d'éléments d'appui ou de maintien.

27. Dispositif selon la revendication 26, caractérisé en ce que les éléments d'appui ou de maintien (27) peuvent être insérés par le haut dans les parties à filetage femelle (25) correspondantes.

28. Dispositif selon l'une des revendications 21 à 27, caractérisé en ce qu'à chaque premier moyen de réglage (18, 19, 20) est associé un second moyen de réglage (23, 24, 25) et en ce que les premier et second moyens de réglage mutuellement associés sont reliés chaque fois l'un à l'autre par un entraînement (29) commun.

29. Dispositif selon l'une des revendications 21 à 28, caractérisé en ce que, pour régler manuellement les premier et/ou second moyens de réglage (18, 19, 20 ; 23, 24, 25), est prévue une roue ou un volant de réglage (22) comportant une échelle de réglage.
